# DEMANDE DE BREVET EUROPEEN

(11) **EP 1 246 128 A1**
(43) Date de publication de la demande: **02.10.2002**
(21) Numéro de dépôt: 01400726.4
(22) Date de dépôt: 21.03.2001
(51) Int. Cl.: G06T 5/40

(54) **Extraction de lignes de niveau dans des images numérisées, et son utilisation pour le contrôle d'un déplacement**

(71) Demandeur: INSTITUT NATIONAL DE RECHERCHE SUR LES TRANSPORTS ET LEUR SECURITE (INRETS), 94110 Arcueil (FR)
(72) Inventeur: Tarel, Jean-Philippe, 75002 Paris (FR); Guichard, Frédéric, 75012 Paris (FR); Aubert, Didier, 91540 Mennecy (FR)
(74) Mandataire: Laget, Jean-Loup

(57) **Abrégé**

Ce programme informatique de traitement d'image numérisée, ledit programme informatique comporte des codes d'instruction exécutables par un premier ordinateur (21) pour :
- recevoir une image numérisée discrétisée selon un pavage et mémoriser ladite image dans une mémoire (26),
- prédéfinir une ou plusieurs classe(s) de primitives géométriques,
- effectuer un cheminement sur un maillage formé des arêtes dudit pavage;
- éprouver si un chemin parcouru au cours dudit cheminement se superpose à une ou plusieurs lignes de niveau de l'image et si ledit chemin appartient à ladite ou auxdites classe(s) prédéfinie(s) de primitives géométriques ;
- regrouper une ou des partie(s) de lignes de niveau parcourues au cours dudit cheminement en primitives géométriques appartenant à ladite ou auxdites classe(s) prédéfinie(s) ;
- fournir une nouvelle image comportant l'ensemble des primitives géométriques en tant que représentation de ladite image numérisée reçue.

## Description

La présente invention concerne un procédé et un programme informatique de traitement, fondé sur des critères uniquement géométriques, d'une image numérisée discrétisée en pavés, une utilisation de ce procédé pour contrôler un déplacement, et un dispositif pour la mise en oeuvre de cette utilisation.

L'invention peut être utilisée avec avantage dans des applications industrielles appartenant par exemple aux domaines du codage d'image, de l'indexation d'images, de la segmentation d'image, de la reconnaissance de formes dans une image, de la poursuite de formes dans une séquence d'images ou de la reconstruction stéréoscopique à partir d'images.

Dans des procédés connus, une image numérisée résulte d'une discrétisation d'un espace n-dimensionnel selon un motif répétitif constitué d'un ensemble fini de pavés à chacun desquels est associée une valeur numérique et dont la géométrie dépend de la technique de discrétisation utilisée. Cette discrétisation est obtenue par une technique connue, par exemple par un appareil photosensible ou par un capteur de distance tel qu'un lidar, un radar ou un sonar. Le résultat de la discrétisation est appelé pavage et ses éléments, les pavés, sont en nombre fini. L'ensemble des arêtes des pavés définit un maillage.

Dans le cadre de l'invention, on entend par primitive géométrique, toute courbe de l'espace n-dimensionnel, bornée aux limites de l'image ou tout chemin continu ou discontinu selon les arêtes du pavage et plus généralement toute union ou intersection de primitives géométriques ainsi définies. Lorsque la primitive géométrique s'identifie à une courbe, on entend, dans cette invention, par classe de primitives géométriques, l'ensemble des courbes de même définition formelle. Dans ce cas, les primitives géométriques sont qualifiées de formelles. Lorsque la primitive géométrique s'identifie à un chemin, on entend, dans cette invention, par classe de primitives géométriques l'ensemble des chemins satisfaisant une ou plusieurs conditions de parcours sur les arêtes des pavés. Dans ce cas, les primitives géométriques sont qualifiées de digitales. Selon l'exploitation technique que l'on veut faire des primitives géométriques qu'elles soient formelles ou digitales, l'utilisateur du procédé objet de l'invention choisit les classes de ces primitives géométriques qu'il considère comme pertinentes. A toute primitive géométrique, on peut en outre associer un sens de parcours défini selon les techniques classiques.

Dans le cadre de l'invention, on considère qu'une classe de primitives géométriques est auto-génératrice si tout parcours inachevé d'une primitive de la classe est aussi une primitive de la classe. Lorsque la classe choisie de primitives géométriques n'est pas auto-génératrice, on supposera, dans le cadre de l'invention, que celle-ci peut se déduire d'une unique plus petite classe de primitives géométriques, auto-génératrice qui la contient, par l'adjonction de critères complémentaires qui à chaque primitive de la classe auto-génératrice indique son appartenance ou non à la classe choisie. Dans ce cas, la classe choisie est remplacée par la classe auto-génératrice munie de critères complémentaires.

Il existe des procédés connus de transformation d'une image en une liste de primitives. Dans ces procédés, les primitives sont soit des points particuliers du pavage comme des points de fort gradient des valeurs numériques caractéristiques de chaque pavé ou des points de valeur numérique extrémale; soit des groupes de points connexes et de caractéristiques communes définissant des régions ; soit des groupes de points connexes définissant des lignes particulières, appelés contours.

Dans le cas où les primitives sont des contours, la mise en oeuvre des procédés connus implique deux opérations successives, une opération de détection des points formant les contours et une opération de regroupement de ces points en primitives.

L'opération de détection de points formant les contours, encore appelée détection de contours, comprend une opération élémentaire de régularisation de l'image et une opération élémentaire de seuillage. L'objet de cette opération de détection des points formant les contours est de ne retenir que les points supposés pertinents et de faciliter l'opération de regroupement. Le résultat de la détection des points formant les contours est un ensemble de points appelés points de contours auxquels on peut associer des caractéristiques comme l'orientation du gradient des valeurs numériques ou le module de ce gradient, en vue de les exploiter dans l'opération de regroupement. L'article de J. Canny, intitulé A Computational Approach to Edge Detection, paru dans la revue Transactions on Pattern Analysis and Machine Intelligence en 1986 décrit un procédé connu de détection de contours qui se décompose en une opération élémentaire de régularisation qui consiste en un lissage par convolution par une Gaussienne, et en une opération élémentaire de seuillage par hystérésis. D. Mumford et J. Shah, décrivent dans l'article Boundary Detection by Minimizing Functionals, paru dans les actes de la conférence Computer Vision and Pattern Recognition en 1985, un autre procédé de détection consistant à approcher l'image par une fonction constante par morceaux, les frontières des morceaux constituant alors les contours dans l'image. L'approximation joue le rôle dévolu à la régularisation et le degré d'approximation celui de seuil.

La difficulté d'exploitation des procédés fondés sur la détection de points de contours réside dans la traduction numérique d'un critère de pertinence en vue de détecter ces points. Le critère de pertinence unanimement utilisé exploite l'amplitude de la variation des valeurs numériques entre les points. L'application de ce critère rend difficile la détection de phénomènes peu contrastés.

Dans les procédés connus, l'opération de regroupement des points de contours en primitives géométriques, exploite l'une des trois méthodes suivantes, un chaînage des points de contours utilisant par exemple une représentation par "code-chaîne" comme le propose H. Freeman dans « Boundary encoding and processing » paru dans la revue Picture processing and psychopictorics en 1970, suivi éventuellement d'une approximation de chaque chaîne ainsi obtenue par des segments de droites comme le proposent H. Feng et T. Pavlidis, dans l'article « Decomposition of polygons into simpler components », paru dans la revue Transactions on Computers en 1975 ; un partitionnement en régions des points de contours partageant au moins une caractéristique similaire comme l'indiquent J. Brian Burns, Allen R. Hanson dans l'article « Extracting Straight Lines », paru dans la revue Transactions on Pattern Analysis and Machine Intelligence en 1986; un regroupement utilisant une technique d'accumulation comme Hough le revendique dans le brevet US 3,069,654.

Les opérations de regroupement exploitées dans les procédés connus ont l'inconvénient de ne fournir qu'un regroupement en primitives non exhaustif et approximatif. La méthode du chaînage des points de contours est trop sensible, dépend du choix du ou des points de départ et ne fournit qu'une approximation des caractéristiques géométriques des primitives. La méthode de partitionnement en régions des points de contours est d'une complexité combinatoire importante et le partitionnement peut être instable. La technique d'accumulation par son caractère global appauvrit la géométrie, ce qui a pour conséquence de réduire les possibilités d'extraction de primitives notamment lorsqu'elles comportent peu de points et de confondre des phénomènes parasites avec des primitives.

Le but de l'invention est de fournir une transformation de l'image en vue d'en extraire une quantité, réduite mais pertinente, d'information de nature géométrique sur ses lignes de niveau en s'affranchissant des inconvénients précités.

Pour cela, la présente invention a pour objet un procédé de traitement d'image numérisée, ledit procédé comportant une étape consistant à recevoir une image numérisée discrétisée selon un pavage, ladite image comportant une séquence de signaux représentant des valeurs de champ, au moins une valeur de champ étant associée à chacun des pavés dudit pavage, caractérisé en ce qu'il n'exploite de l'image que l'ensemble de ses lignes de niveau définies à partir des valeurs de champ associées à chaque pavé, ledit procédé comportant les étapes consistant à :
- prédéfinir une ou plusieurs classe(s) de primitives géométriques ;
- générer à partir de ladite image reçue une liste de primitives géométriques appartenant à ladite ou auxdites classe(s) prédéfinie(s), chaque primitive géométrique de ladite liste étant générée en effectuant un cheminement sur un maillage formé des arêtes dudit pavage et en regroupant une ou des partie(s) de lignes de niveau qui sont parcourues au cours dudit cheminement, ledit cheminement étant poursuivi tant qu'un chemin parcouru depuis au moins une jonction d'arêtes initiale se superpose au moins partiellement à une ou plusieurs lignes de niveau et tant que ce chemin appartient à ladite ou auxdites classe(s) prédéfinie(s) de primitives géométriques ;
- fournir une nouvelle image comportant l'ensemble des primitives géométriques de ladite liste en tant que représentation de ladite image reçue.

Selon l'invention, l'ensemble des arêtes qui délimitent l'ensemble des pavés de valeur numérique supérieure ou égale à une valeur prédéterminée est appelé ligne de niveau. Avantageusement, chaque ligne de niveau s'identifie à une frontière d'un ensemble de pavés dudit pavage pour chacun desquels une valeur de champ est supérieure ou égale à un niveau prédéterminé. Une ligne de niveau partielle est un sous-ensemble d'arêtes inclus dans une ligne de niveau.

Contrairement aux procédés connus, le procédé objet de l'invention ne comporte pas d'opération de détection de points de contours, fondée sur l'amplitude de la variation de valeurs numériques entre les points du pavage. La détection des contours repose uniquement sur l'existence d'une variation de valeurs numériques entre les pavés. De plus le procédé objet de l'invention ne comporte pas d'opération élémentaire de régularisation de l'image.

Contrairement aux procédés connus, l'opération de regroupement du procédé objet de l'invention se distingue par son exhaustivité et par l'absence d'approximation. Il opère une extraction indépendante de l'échelle des valeurs numériques de l'image, et une extraction reposant sur des critères uniquement géométriques. Il est possible de choisir la taille des primitives extraites, ce qui permet d'obtenir une représentation multi-échelle, plus ou moins fine de l'image. En outre, le procédé objet de l'invention ne nécessite aucun pré-traitement de l'image, ni filtrage, ni détection de contour, ni amélioration du contraste.

Le procédé consiste d'abord à choisir un certain nombre de jonctions d'arêtes du pavage intéressantes pour l'application considérée, ensuite à cheminer sur le maillage à partir de chacune de ses jonctions d'arêtes, tant que le chemin parcouru se superpose à une ou plusieurs lignes de niveau dont l'ensemble définit une carte topographique et tant que le chemin parcouru appartient à la classe choisie de primitives géométriques, et enfin à ne sélectionner éventuellement que les chemins parcourus satisfaisant aux critères complémentaires.

La classe choisie de primitives géométriques peut notamment être la classe des segments de droite orientés ou la classe de courbes orientées de faibles courbures.

Dans cette invention, lorsque les primitives géométriques sont digitales, la classe choisie est donnée par une liste de chemins sur le maillage. On dit qu'un chemin du maillage appartient à cette classe si le chemin fait partie de cette liste, indépendamment de sa position. Dans ce cas, chaque primitive géométrique s'identifie à un chemin sur des arêtes dudit maillage, ladite ou lesdites classe(s) prédéfinie(s) de primitives géométriques étant définie(s) par des conditions de cheminement prédéterminées et éventuellement par des critères complémentaires.

Lorsque les primitives géométriques sont formelles, on considère qu'un chemin du maillage appartient à la classe choisie s'il existe un élément de cette classe passant uniquement par les pavés séparés par le chemin du maillage. Dans le cas où les primitives géométriques sont formelles, il est possible d'associer à la classe choisie, une classe de primitives géométriques digitales formée de la liste des chemins du maillage appartenant à la classe choisie. La classe associée est la traduction digitale sur le pavage donné de la classe formelle et elle est ensuite étendue en une classe auto-génératrice.

La superposition du chemin parcouru à une ou plusieurs lignes de niveau peut respecter la compatibilité des orientations du chemin parcouru et des lignes de niveau ou faire abstraction de cette sujétion.

La superposition du chemin parcouru à une ou plusieurs lignes de niveau peut être choisie totale ou partielle. Dans ce dernier cas, on limite la non-superposition du chemin parcouru à une ou plusieurs lignes de niveau par un critère quantitatif de l'un des types suivants : longueur absolue ou relative des tronçons non superposés, longueur totale des tronçons non superposés ou position des tronçons non superposés. La superposition du chemin parcouru à une ou plusieurs lignes de niveau partielle(s) est particulièrement adaptée aux primitives géométriques qui apparaissent dans l'image sous forme d'arêtes disjointes comme des lignes pointillées.

Avantageusement, le procédé selon l'invention comporte une étape consistant à construire une structure informatique codant l'ensemble des chemins dudit maillage appartenant à ladite ou auxdites classe(s) prédéfinie(s) de primitives géométriques, l'étape de génération de ladite liste de primitives géométriques étant effectuée de manière que l'épreuve d'appartenance de chaque chemin parcouru à ladite ou auxdites classe(s) prédéfinie(s) est réalisée à l'aide de ladite structure informatique.

Dans ce cas, l'épreuve d'appartenance d'un chemin à une classe de primitives géométriques est réalisée par l'utilisation de cette structure informatique codant l'ensemble des chemins du maillage appartenant à la ou aux classes choisies de primitives géométriques. Cette structure informatique représentant la liste des primitives géométriques de la ou des classes choisies de primitives géométriques est de type arbre ; elle peut également être une transformation d'une structure de type arbre en une structure de type graphe orienté. Avantageusement, lorsque c'est utile, le procédé selon l'invention peut comporter une étape de transformation de la structure de type arbre en une structure de type graphe orienté.

L'avantage de ces structures informatiques réside dans la réduction de la redondance de parties de chemins que l'on constaterait en exploitant une liste de tous les chemins possibles. Dans ces structures informatiques, chaque noeud correspond à une jonction d'arêtes du pavage et chaque arc issu d'un noeud correspond à une arête du pavage partant de ce noeud. L'existence d'un noeud et d'un arc dans l'arbre ou le graphe sont assujetties au fait que chaque branche de l'arbre ou chemin du graphe code un chemin du maillage appartenant à la classe choisie de primitives géométriques. Chaque noeud de la descendance à partir d'un noeud de départ correspond à un chemin qui existe aussi dans la classe et qui est prolongé d'une arête.

La structure informatique de type arbre peut toujours être construite à partir d'une liste des chemins possibles. L'arbre est construit itérativement en y ajoutant successivement les chemins contenus dans la liste. Pour chaque chemin de la liste on saute la portion du chemin déjà codée dans l'arbre et on ajoute une branche pour la portion non encore codée.

La structure informatique de type graphe orienté permet de diminuer encore plus les redondances dans le cas ou des chemins ont des portions répétitives successives. Dans ce cas, au lieu d'ajouter plusieurs fois la même portion successivement dans une branche de l'arbre, on crée à la fin de la portion un arc vers le début de la portion. De part sa construction, le graphe orienté décrit dans cette invention possède toujours un noeud de départ.

Un premier exemple d'une telle structure informatique de type arbre est un arbre binaire dans le cas où les primitives géométriques sont de type segment de droite et où le pavage de l'image est un quadrilatère. La profondeur de l'arbre est définie par la longueur maximale des segments de droite considérés. Cet arbre est binaire car le parcours d'un segment digital d'une certaine direction ne nécessite aux plus que deux types de déplacements selon les arêtes. La classe de primitives géométriques prédéfinie est alors l'ensemble des segments de droites digitaux de longueur inférieure à une longueur maximale prédéterminée, ou l'un de ses sous-ensembles.

Un second exemple d'une telle structure informatique de type graphe est un graphe orienté dans le cas où les primitives sont des courbes rectilignes sur une certaine différence d'abscisses curvilignes, compte tenu de la discrétisation de l'image. Lorsque le pavage est un quadrilatère, ce graphe peut être construit à partir d'un arbre du type donné en premier exemple, en ajoutant à certaines de ses feuilles des arcs vers des noeuds ; la profondeur de cet arbre étant égale à la différence d'abscisses curvilignes sur laquelle la courbe est assimilée à un segment de droite. Avantageusement, la structure informatique de type graphe orienté est construite à partir d'un arbre dont certaines feuilles ont des arcs-fils sur elles-mêmes ou sur d'autres feuilles, la classe de primitives géométriques prédéfinie étant l'ensemble des courbes de faible courbure, c'est-à-dire l'ensemble des courbes assimilables à des courbes rectilignes sur une certaine différence d'abscisses curvilignes, ladite différence d'abscisses curvilignes étant prédéterminée en fonction de la discrétisation de ladite image numérisée.

L'épreuve d'appartenance d'un chemin à une classe de primitives géométriques est réalisée récursivement par le parcours de la structure informatique quel qu'en soit le type. Le noeud de départ de la structure informatique est associé à la jonction d'arêtes du pavage jugée intéressante pour l'application considérée, il s'agit de la jonction de départ. A partir du noeud de départ on suit un arc de la structure informatique dont le noeud terminal est associé à une jonction d'arêtes du pavage et on continue de la sorte à partir de ce noeud terminal. Lors de ce parcours, on ne retient pour déterminer l'appartenance d'un chemin à la classe de primitives choisie que les arêtes qui correspondent aux arcs reliant les noeuds rencontrés dans la structure informatique. A partir de la jonction terminale d'un chemin, nous nommons arête pertinente une arête qui prolonge le chemin, ce chemin prolongé appartenant toujours à la classe des primitives choisies.

Le procédé objet de l'invention est fondé sur l'exploitation de deux algorithmes, le premier en vue de construire une structure informatique du type arbre ou du type graphe selon la classe choisie de primitives géométriques, le second en vue d'utiliser cette structure pour transformer l'image en primitives géométriques sur des critères uniquement géométriques.

Lorsque la classe de primitives géométriques formelles est l'ensemble des segments de droites de longueur inférieure à une longueur N choisie en fonction de l'application, ou l'un de ses sous-ensembles, et que le pavage est un quadrilatère, le procédé objet de l'invention exploite un algorithme de construction de la structure informatique de type arbre binaire qui tire parti de la représentation bien connue des segments de droite par des codes-chaînes. Un segment digital est représenté par une succession de deux types de symboles.

Chaque symbole code soit un déplacement horizontal, soit un déplacement vertical, le long des arêtes. Ces symboles se répètent obligatoirement selon une séquence périodique nommée période qui est caractéristique de la direction du segment de droite.

Cet algorithme de construction de la structure informatique de type arbre comporte les tâches suivantes : après avoir choisi une longueur maximale N et après avoir créé un arbre binaire réduit à sa racine, on génère la liste de toutes les périodes de code-chaînes de longueur inférieure ou égale à la longueur maximale N. Chaque période est traitée successivement et de façon analogue. La période courante, de longueur n, est dupliquée par périodisation jusqu'à atteindre une longueur supérieure ou égale à N. Les N premiers symboles du code-chaîne précédemment construit sont ajoutés, dans l'ordre, sous la forme d'une branche de profondeur croissante dans l'arbre binaire. Par convention, le premier type de symbole correspond à une branche gauche, et le deuxième type à une branche droite. Une permutation circulaire est répétée, n fois, sur le code-chaîne, et ses N premiers symboles sont ajoutés dans l'arbre sous la forme d'une branche. S'il reste une période à traiter, la période suivante devient la période courante, sinon l'algorithme s'arrête et la liste des segments digitaux est alors mémorisée dans l'arbre binaire.

Lorsque la classe de primitives géométriques formelles est un sous-ensemble des segments de droite de longueur inférieure à N, constitué par exemple des segments de direction comprise entre un angle minimal et un angle maximal, l'algorithme comprend une tâche supplémentaire qui consiste à éliminer de la liste des périodes à traiter les périodes qui ne correspondent pas à des segments du sous-ensemble.

Lorsque la classe de primitives géométriques formelles est l'ensemble des courbes de faible courbure, c'est-à-dire l'ensemble des courbes assimilables, sur une certaine différence d'abscisses curvilignes N, à des courbes rectilignes, compte tenu de la discrétisation de l'image, le procédé objet de l'invention exploite un algorithme de construction de la structure informatique de type graphe orienté, construit à partir d'un arbre dont certaines feuilles ont des arcs-fils sur elles-mêmes ou sur d'autres feuilles, cet arbre étant obtenu par l'algorithme décrit ci-dessus. L'algorithme de construction de cette structure informatique de type graphe comporte spécifiquement les tâches suivantes :

Une première feuille de l'arbre est recherchée et est considérée comme la feuille courante. Lors de la recherche, le code-chaîne correspondant au chemin qui mène à la feuille courante depuis la racine est constitué et son premier symbole est enlevé. On obtient ainsi un code-chaîne réduit. A partir de la racine, on parcourt l'arbre selon le code-chaîne réduit. Le noeud d'arrivée est nommé noeud associé à la feuille courante. On relie par des arcs la feuille courante aux noeuds fils du noeud associé. On recherche une autre feuille non traitée s'il en existe ; elle est la nouvelle feuille courante ; s'il n'existe plus d'autres feuilles à traiter l'algorithme de construction du graphe s'arrête.

L'algorithme de transformation de l'image en primitives géométriques comporte les tâches suivantes :

Etant donné une image, on parcourt toutes les jonctions d'arêtes du maillage de l'image jusqu'à ce que l'on en trouve une qui puisse être considérée comme intéressante par l'utilisateur du procédé. Il s'agit de la jonction initiale ; un chemin vide de toute arête est introduit dans une pile dite des chemins à traiter. Tant qu'il reste au moins un chemin dans cette pile, on sélectionne le dernier chemin de la pile. On regarde à partir de la jonction terminale de ce chemin s'il existe des arêtes prolongeant ce chemin et qui se superposent à une ou plusieurs ligne(s) de niveaux. A cette jonction terminale correspond un noeud dans la structure informatique obtenue par l'algorithme de construction et à chaque arête pertinente correspond un arc issu de cette structure informatique. Pour chaque arête pertinente qui se superpose à une ou plusieurs lignes de niveaux, le chemin prolongé est introduit dans la pile des chemins à traiter. Lorsque aucune arête ne peut prolonger le chemin sélectionné, on regarde si les critères quantitatifs secondaires sont satisfaits pour ce chemin ; si c'est le cas, ce chemin est mémorisé. Dans tous les cas, le chemin sélectionné est supprimé de la pile des chemins à traiter. Lorsque la pile des chemins à traiter est vide, on change d'arête initiale et on répète le processus. Lorsque toutes les arêtes du maillage, considérées comme intéressantes pour l'application, ont été traitées comme arête initiale, l'algorithme s'arrête ; le résultat obtenu est la liste des chemins du maillage qui ont été mémorisés. Ces chemins constituent les primitives géométriques digitales recherchées et extraites.

Ces primitives géométriques digitales extraites forment donc une liste de chemins du maillage, qui est une sous-liste de la liste de chemins constituant la ou les classe(s) digitale(s) choisie(s) initialement ou associées à la ou aux classe(s) formelle(s) choisie(s) initialement. Ces primitives géométriques digitales extraites sont le cas échéant traduites sous forme formelle. Dans un tel algorithme l'utilisation des piles peut être remplacée par l'utilisation de techniques de récursivité équivalentes.

L'invention a pour deuxième objet un programme informatique de traitement d'image numérisée, ledit programme informatique comportant des codes d'instruction propres à être lus ou stockés sur un support, caractérisé en ce que lesdits codes d'instruction sont exécutables par un premier ordinateur pour :
- recevoir une image numérisée discrétisée selon un pavage et mémoriser ladite image dans une mémoire dudit premier ordinateur, ladite image comportant une séquence de signaux représentant des valeurs de champ, au moins une valeur de champ étant associée à chacun des pavés dudit pavage,
- prédéfinir une ou plusieurs classe(s) de primitives géométriques,
- effectuer un cheminement sur un maillage formé des arêtes dudit pavage ;
- éprouver si un chemin parcouru au cours dudit cheminement depuis au moins une jonction d'arêtes initiale se superpose au moins partiellement à une ou plusieurs lignes de niveau de l'image, lesdites lignes de niveau étant définies à partir des valeurs de champ associées à chaque pavé, et si ledit chemin appartient à ladite ou auxdites classe(s) prédéfinie(s) de primitives géométriques ;
- regrouper une ou des partie(s) de lignes de niveau parcourues au cours dudit cheminement en primitives géométriques appartenant à ladite ou auxdites classe(s) prédéfinie(s) ;
- générer une liste desdites primitives géométriques regroupées ;
- fournir une nouvelle image comportant l'ensemble des primitives géométriques de ladite liste en tant que représentation de ladite image numérisée reçue.

De préférence, lesdits codes d'instruction sont exécutables par un ordinateur, distinct ou non dudit premier ordinateur, pour construire une structure informatique codant l'ensemble des chemins dudit maillage appartenant à ladite ou auxdites classe(s) prédéfinie(s) de primitives géométriques et pour mémoriser ladite structure informatique dans des moyens de mémorisation, distincts ou non de ladite mémoire du premier ordinateur, l'épreuve d'appartenance dudit chemin parcouru à ladite ou auxdites classe(s) prédéfinie(s) de primitives géométriques étant effectuée à l'aide de ladite structure informatique mémorisée.

Le programme informatique objet de l'invention est aussi fondé sur l'exploitation des deux algorithmes susmentionnés, le premier en vue de construire une structure informatique du type arbre ou du type graphe selon la classe choisie de primitives géométriques, le second en vue d'utiliser cette structure pour transformer l'image en primitives géométriques sur des critères uniquement géométriques.

L'invention a pour troisième objet une utilisation du procédé susmentionné pour le contrôle actif ou passif d'un déplacement, au moins un élément de repérage étant représenté sur une série d'au moins une image numérisée, chaque image de ladite série étant discrétisée selon un même pavage et comportant une séquence de signaux représentant des valeurs de champ, au moins une valeur de champ étant associée à chacun des pavés dudit pavage, ledit élément de repérage comportant une ou plusieurs primitive(s) géométrique(s) particulière(s) appartenant à une ou plusieurs classe(s) particulière(s), caractérisée en ce que chaque image de ladite série est traitée par ledit procédé de manière à fournir une nouvelle série d'au moins une nouvelle image, ladite ou lesdites classe(s) de primitives géométriques prédéfinie(s) au cours dudit procédé étant constituée(s) de ladite ou desdites classe(s) particulière(s) ; une position successive dudit élément de repérage étant détectée dans chaque image de ladite nouvelle série à partir de ladite ou desdites primitive(s) géométrique(s) particulière(s) afin de contrôler un déplacement relatif dudit élément de repérage.

Avantageusement, l'étape de construction de ladite structure informatique n'est effectuée qu'une seule fois, la même structure informatique étant utilisée pour le traitement de toutes les images.

L'invention a pour quatrième objet un dispositif destiné à la mise en oeuvre de l'utilisation susmentionnée, caractérisé en ce qu'il comporte :
- un moyen d'acquisition d'images numérisées discrétisées selon un même pavage et comportant chacune une séquence de signaux représentant des valeurs de champ, au moins une valeur de champ étant associée à chacun des pavés dudit pavage,
- une unité centrale munie d'une mémoire et reliée audit moyen d'acquisition pour recevoir lesdites images numérisées,
- le programme informatique susmentionné agencé de manière à être exécutable par ladite unité centrale pour traiter lesdites images reçues de manière à fournir des nouvelles images en tant que représentation desdites images reçues,
- des moyens de détection aptes à détecter des positions successives d'au moins un élément de repérage dans lesdites nouvelles images à partir d'une ou plusieurs primitive(s) géométrique(s) particulière(s) desdites nouvelles images,
- un moyen de commande pour commander activement ou passivement un déplacement relatif entre ledit moyen d'acquisition et ledit élément de repérage.

Un mode de réalisation particulier des algorithmes du procédé et du programme informatique objets de l'invention est décrit à l'aide des figures 1, 2, 3, 4, 5, 6, et 7 du dessin annexé, à titre purement illustratif et non limitatif. Un mode de réalisation particulier de l'utilisation et du dispositif objets de l'invention est décrit à l'aide des figures 8 et 9. Sur le dessin :

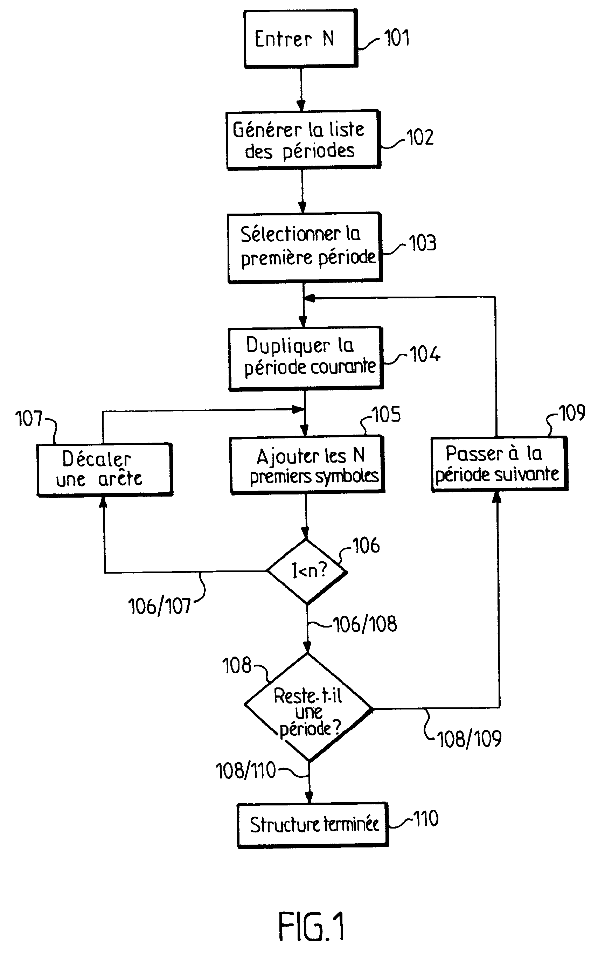

- La figure 1 représente un algorithme de construction d'une structure informatique de type arbre selon l'invention.

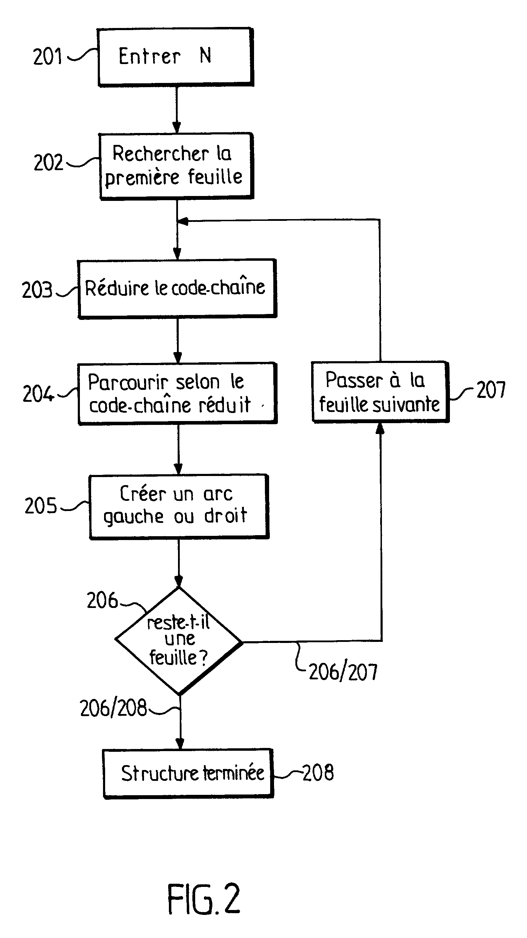

- La figure 2 représente un algorithme de construction d'une structure informatique de type graphe selon l'invention.

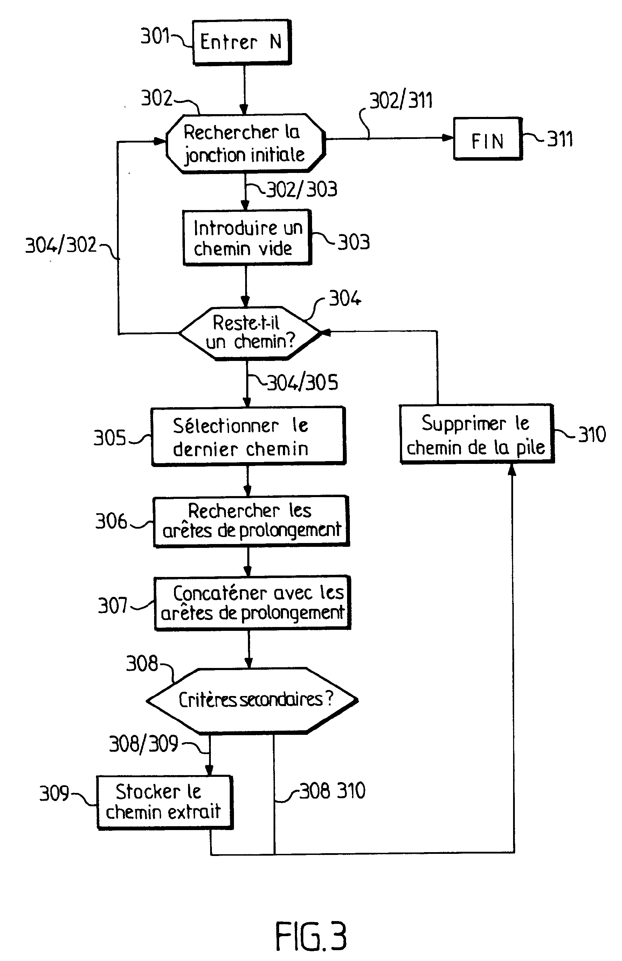

- La figure 3 représente l'algorithme de transformation de l'image en primitives géométriques selon l'invention.

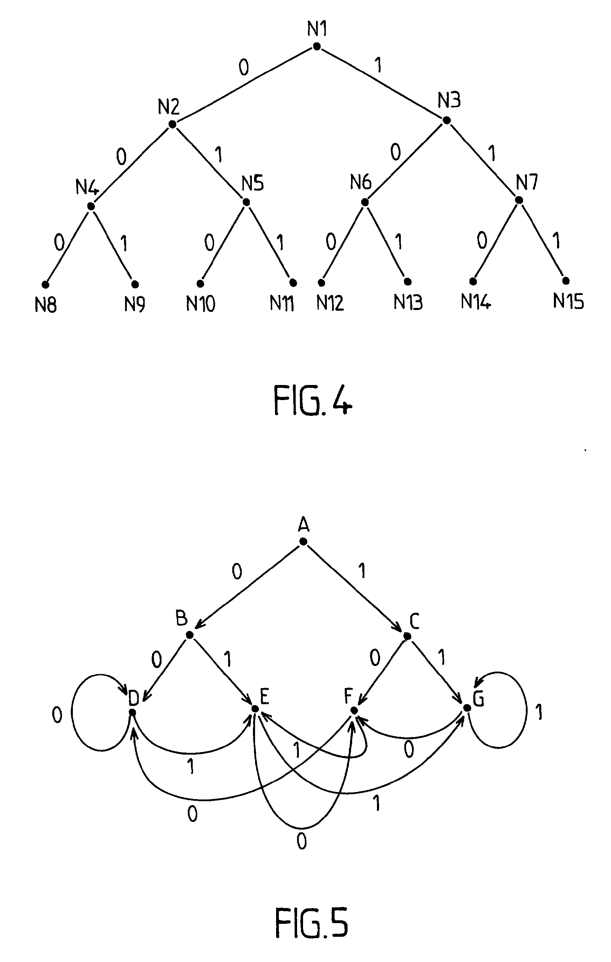

- La figure 4 représente un exemple de construction d'une structure informatique de type arbre selon l'invention.

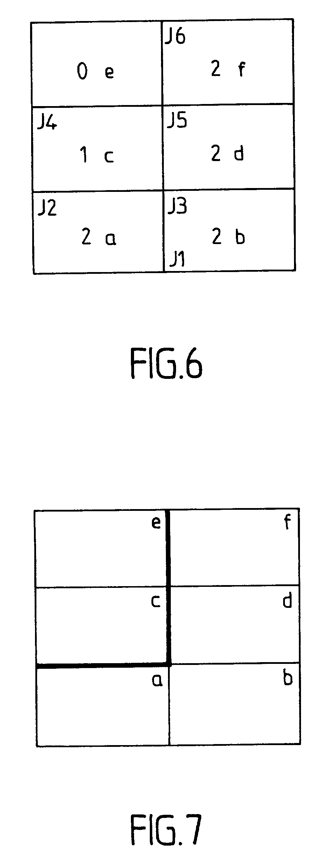

- La figure 5 représente un exemple de construction d'une structure informatique de type graphe selon l'invention.
- La figure 6 représente une image élémentaire à traiter.
- La figure 7 représente le résultat du traitement selon l'invention de l'image de la figure 6.

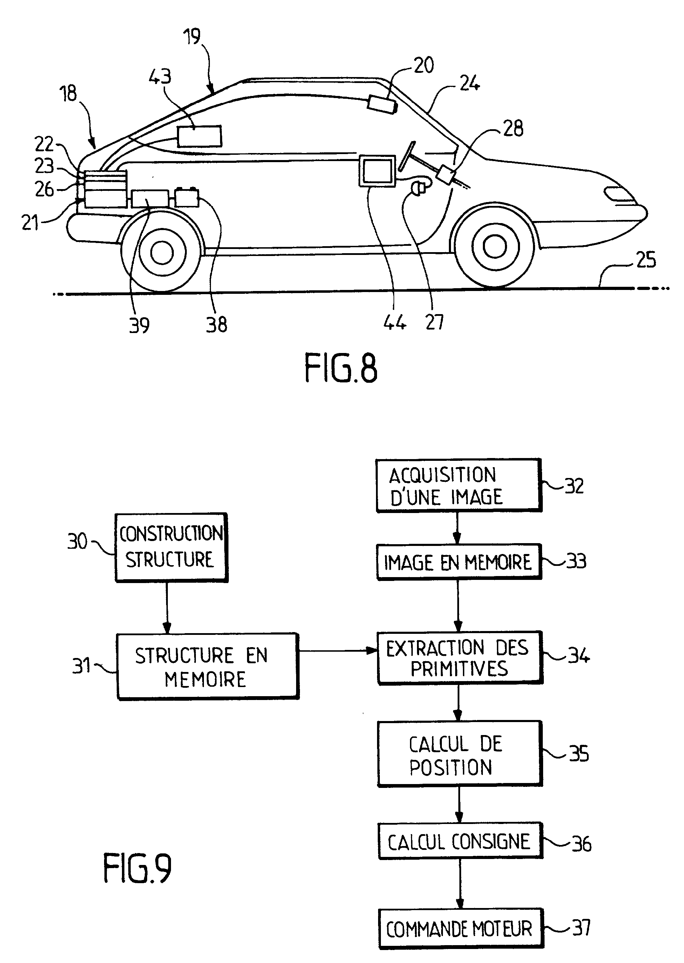

- La figure 8 représente schématiquement et partiellement en coupe un véhicule automobile équipé d'un système de contrôle de déplacements selon l'invention.
- La figure 9 représente schématiquement les étapes d'une utilisation du procédé de traitement d'image selon l'invention au contrôle de déplacements.

La figure 1 montre la construction de la structure informatique de type arbre. Cet algorithme est fondé sur une entrée 101 et sur les neuf tâches 102 à 110. Entrée 101 : on entre la longueur maximale N et on crée un arbre binaire réduit à sa racine :
- Tâche 102 : On génère la liste de toutes les périodes de codes-chaînes de segments digitaux de longueur inférieure ou égale à la longueur maximale N.
- Tâche 103 : On sélectionne un premier code-chaîne dans la liste construite dans la tâche 102 ; elle devient la période courante et sa longueur est notée n.
- Tâche 104: La période courante est dupliquée par périodisation jusqu'à atteindre une longueur supérieure ou égale à N ; Elle forme le code-chaîne courant. On initialise un compteur I à 1.
- Tâche 105 : Les N premiers symboles du code-chaîne courant sont ajoutés, dans l'ordre, sous la forme d'une branche de profondeur croissante dans l'arbre binaire. Par convention, le premier type de symbole correspond à une branche gauche, et le deuxième type à une branche droite.
- Tâche 106 : On teste si le compteur I est inférieur à n.
- Liaison 106/107 : Si le test de la Tâche 106 est positif, on passe à la tâche 107.
- Liaison 106/108 : Si le résultat du test de la Tâche 106 est négatif, on passe à la tâche 108.
- Tâche 107 : On réalise une permutation circulaire sur le code-chaîne courant, on ajoute 1 au compteur I, et on passe à la tâche 105 en utilisant le code-chaîne courant modifié.
- Tâche 108 : On teste s'il reste au moins une période à traiter dans la liste des périodes construites dans la tâche 102.
- Liaison 108/109 : si le résultat du test réalisé dans la tâche 108 est positif, on passe à la tâche 109.
- Liaison 108/110 : si le résultat du test réalisé dans la tâche 108 est négatif, on passe à la tâche 110.
- Tâche 109: La première période restant à traiter est sélectionnée et devient la période courante. Ensuite, on retourne à la tâche 104.
- Tâche 110: L'algorithme de construction de l'arbre est terminé et la structure informatique d'arbre est conservée en mémoire.

La figure 2 représente un algorithme de construction de la structure informatique de type graphe. Cet algorithme est fondé sur une entrée 201 et sur les sept tâches spécifiques 202 à 208 :
- Entrée 201 : on entre la longueur maximale N et on crée un arbre binaire selon l'algorithme de construction de la structure informatique de type arbre décrit ci-dessus.
- Tâche 202: Une première feuille de la structure informatique est recherchée et est considérée comme la feuille courante. Lors de cette recherche, le code-chaîne correspondant à la branche parcourue est enregistrée.
- Tâche 203 : On enlève le premier symbole du code-chaîne construit en tâche 202 et on obtient ainsi un code-chaîne réduit courant.
- Tâche 204: A partir de la racine de la structure informatique, on parcourt cette structure selon le code-chaîne réduit. Par convention, le premier type de symbole correspond à un arc à gauche, et le deuxième type à un arc à droite. Le noeud d'arrivée est nommé noeud associé à la feuille courante.
- Tâche 205 : Si le noeud-fils, par l'arc gauche, du noeud associé existe, on crée un arc gauche entre la feuille courante et le noeud-fils par l'arc gauche. Si le noeud-fils, par l'arc droit, du noeud associé existe, on crée un arc droit entre la feuille courante et le noeud-fils par l'arc droit.
- Tâche 206 : On teste s'il reste au moins une feuille à traiter.
- Liaison 206/207 : Si le résultat du test réalisé dans la tâche 206 est positif, on passe à la tâche 207.
- Liaison 206/208 : Si le résultat du test réalisé dans la tâche 206 est négatif, on passe à la tâche 208.
- Tâche 207 : La première feuille restant à traiter est sélectionnée et devient la feuille courante. On retourne à la tâche 203.
- Tâche 208: L'algorithme de construction du graphe se termine et la structure informatique de graphe est conservée en mémoire.

La figure 3 représente l'algorithme de transformation de l'image en primitives géométriques. Cet algorithme est fondé sur une entrée 301 et sur les dix tâches spécifiques 302 à 311 :
- Entrée 301 : on entre l'image numérisée à traiter, les critères quantitatifs secondaires donnés par l'utilisateur et la structure informatique, obtenue notamment par l'un des deux algorithmes de construction de la structure informatique susmentionnés.
- Tâche 302 : on recherche une jonction d'arêtes considérée comme intéressante.
- Liaison 302/303 : lorsqu'une jonction est trouvée dans la tâche 302, elle est transmise à la tâche 303 pour initialisation d'une recherche de chemins partant de cette jonction d'arêtes.
- Liaison 302/311 : lorsque aucune jonction n'est trouvée dans la tâche 302, on passe à la tâche 311.
- Tâche 303 : on construit un chemin vide. Ce chemin est introduit dans la pile des chemins à traiter.
- Tâche 304 : On teste s'il reste au moins un chemin dans la pile des chemins à traiter.
- Liaison 304/302 : si la pile est vide, on retourne à la tâche 302.
- Liaison 304/305 : s'il reste au moins un chemin dans la pile, on passe à la tâche 305.
- Tâche 305 : on sélectionne le dernier chemin de la pile en vue de son traitement ; ce chemin est appelé chemin sélectionné.
- Tâche 306 : à la jonction terminale du chemin sélectionné correspond un noeud dans la structure informatique obtenue par l'algorithme de construction de cette structure. A chaque arc de cette structure issu de ce noeud correspond une arête pertinente sur le maillage. Chaque arête pertinente qui se superpose à une ou plusieurs lignes de niveaux est retenue comme arête de prolongement du chemin sélectionné.
- Tâche 307 : on prolonge le chemin sélectionné par concaténation avec chaque arête de prolongement obtenue à la tâche 306. On construit ainsi pour chaque arête un chemin prolongé et chaque chemin prolongé est ajouté à la pile des chemins à traiter.
- Tâche 308 : on teste la validité du chemin sélectionné selon les critères quantitatifs secondaires entrés en 301.
- Liaison 308/309 : si tous les critères quantitatifs secondaires sont satisfaits, on passe à la tâche 309.
- Liaison 308/310 : si l'un des critères quantitatifs secondaire n'est pas satisfait, on passe à la tâche 310.
- Tâche 309 : on stocke le chemin sélectionné dans la liste des primitives extraites.
- Tâche 310 : on supprime le chemin sélectionné de la pile des chemins à traiter. On passe à la tâche 304.
- Tâche 311 : arrêt de l'algorithme de recherche de primitives.
Le résultat est la liste des primitives extraites qui ont été stockées lors des exécutions de la tâche 309.

La figure 4 représente, à titre d'exemple, un arbre binaire de profondeur 3. Les cercles noirs représentent les noeuds de l'arbre et les segments de droite représentent les arcs de l'arbre. Les noeuds de l'arbre qui ne sont pas des feuilles sont indicés par N1, N2, N3, N4, N5, N6, N7, N8, N9, N10, N11, N12, N13, N14 et N15. Dans cette figure le chiffre 0 représente le premier symbole codant un type de déplacement dans le maillage, par exemple le déplacement horizontal. Le chiffre 1 représente un second symbole codant un autre type de déplacement dans le maillage, par exemple un déplacement vertical. Le parcours d'une branche de l'arbre donne une succession de symboles 0 et 1 représentant le code-chaîne de la primitive digitale qui s'inscrit sur le maillage.

Dans la construction de l'arbre représenté, à titre d'exemple, à la figure 4, on fixe la longueur maximale N des segments digitaux à trois. Au lancement du programme une structure de type arbre binaire est initialisée en créant un noeud racine (101). Ensuite on génère et on enregistre la liste de toutes les périodes de code-chaîne de segment digital de longueur au plus égale à trois (102). Ces périodes de code-chaîne sont 0, 01, 001, 011 et 1. La première période de code-chaîne est extraite de la liste, elle est de longueur n égale à un. Cette période, 0, est la période courante (103). La période courante est dupliquée par périodisation jusqu'à ce que l'on obtienne un code-chaîne de longueur supérieur ou égal à trois. Le code-chaîne correspondant, dit code-chaîne courant, est donc 000. Un compteur I est initialisé à un et le noeud courant est initialisé à la racine de l'arbre (104). Le premier symbole du code-chaîne courant, c'est-à-dire 0, est associé à la racine de l'arbre binaire par la création d'un arc-fils gauche. A son extrémité est créé un noeud, qui devient le nouveau noeud courant. Ensuite, le second symbole du code-chaîne courant, c'est-à-dire 0, est associé au noeud courant par la création d'un arc-fils gauche. A son extrémité est créé un noeud, qui devient le nouveau noeud courant. Finalement, le troisième symbole du code-chaîne courant, c'est-à-dire 0, est associé au noeud courant par la création d'un arc-fils gauche. A son extrémité est créé un noeud. On a ainsi obtenu la branche la plus à gauche de l'arbre binaire représenté sur la figure 4 (105). Le compteur I de permutation (106) étant égal à n (106/108), on teste s'il reste une période à traiter (108) et on sélectionne la période suivante de la liste des périodes de code-chaîne (108/109). Cette période 01, de longueur n égale à deux, devient la nouvelle période courante (109). La période courante est dupliquée par périodisation jusqu'à ce que l'on obtienne un code-chaîne de longueur supérieure ou égale à trois. Le code-chaîne correspondant, dit code-chaîne courant, est donc 0101. Le compteur de permutation I est réinitialisé à un et le noeud courant redevient la racine de l'arbre (104). Le premier symbole du code-chaîne courant, c'est-à-dire 0, étant déjà représenté par un arc partant du noeud courant, on se positionne dans l'arbre au niveau du noeud correspondant à l'autre extrémité de cet arc, qui devient le nouveau noeud courant. Ensuite, le second symbole du code-chaîne courant, c'est-à-dire 1, est associé au noeud courant par la création d'un arc-fils droit. A son extrémité est créé un noeud, qui devient le nouveau noeud courant. Finalement, le troisième symbole du code-chaîne courant, c'est-à-dire 0, est associé au noeud courant par la création d'un arc-fils gauche. A son extrémité est créé un noeud (105). Le compteur I étant inférieur à deux (106), on l'incrémente à la valeur deux et on réalise une permutation circulaire du code-chaîne courant (106/107), ce qui donne le nouveau code-chaîne courant 1010. La racine de l'arbre redevient le noeud courant (107).

Le premier symbole du code-chaîne courant, c'est-à-dire 1, est associé au noeud courant par la création d'un arc-fils droit. A son extrémité est créé un noeud qui devient le noeud courant. Le deuxième symbole du code-chaîne courant, c'est-à-dire 0, est associé au noeud courant par la création d'un arc-fils gauche. A son extrémité est créé un noeud qui devient le noeud courant. Finalement, le troisième symbole du code-chaîne courant, c'est-à-dire 1, est associé au noeud courant par la création d'un arc-fils droit. A son extrémité est créé un noeud (105).

Le compteur I étant égal à deux (106 et 106/108), on teste s'il reste une période à traiter (108) et on sélectionne la période suivante de la liste des périodes de code-chaîne (108/109). Cette période 001 devient la nouvelle période courante (109). Cette période étant déjà de longueur trois, elle n'est pas transformée par la périodisation. Le code-chaîne correspondant, dit code-chaîne courant, est donc 001. Le compteur I est réinitialisé à un et le noeud courant redevient la racine de l'arbre (104). Le premier symbole du code-chaîne courant, c'est-à-dire 0, étant déjà représenté par un arc partant du noeud courant, on se positionne dans l'arbre au niveau du noeud correspondant à l'autre extrémité de cet arc, qui devient le nouveau noeud courant. Ensuite, le second symbole du code-chaîne courant, c'est-à-dire 0, étant déjà représenté par un arc partant du noeud courant, on se positionne dans l'arbre au niveau du noeud correspondant à l'autre extrémité de cet arc, qui devient le nouveau noeud courant. Finalement, le troisième symbole du code-chaîne courant, c'est-à-dire 1, est associé au noeud courant par la création d'un arc-fils droit. A son extrémité est créé un noeud (105). Le compteur I étant inférieur à trois (106), on l'incrémente à la valeur deux (106/107) et on réalise une permutation circulaire du code-chaîne courant, ce qui donne le nouveau code-chaîne courant 100. La racine de l'arbre redevient le noeud courant (107). Le premier symbole du code-chaîne courant, c'est-à-dire 1, est déjà représenté par un arc-fils droit partant du noeud courant. A son extrémité se trouve un noeud, qui devient le nouveau noeud courant. Ensuite, le second symbole du code-chaîne courant, c'est-à-dire 0, est déjà représenté par un arc-fils gauche du noeud. A son extrémité se trouve un noeud, qui devient le nouveau noeud courant. Finalement, le troisième symbole du code-chaîne courant, c'est-à-dire 0, est associé au noeud courant par la création d'un arc-fils gauche. A son extrémité est créé un noeud (105). Le compteur I étant inférieur à trois (106), on l'incrémente à la valeur trois (106/107) et on réalise une permutation circulaire du code-chaîne courant, ce qui donne le nouveau code-chaîne courant 010 (107). Ce code-chaîne étant déjà représenté dans l'arbre, il n'y a pas création de nouveaux arcs lors du déroulement de la tâche 105.

Le compteur I étant égal à trois (106 et 106/107), on teste s'il reste une période à traiter (108) et on sélectionne la période suivante de la liste des périodes de code-chaîne (108/109). Cette période 011 devient la nouvelle période courante (109). Cette période étant déjà de longueur trois, elle n'est pas transformée par la périodisation. Le code-chaîne correspondant, c'est-à-dire 011, devient le nouveau code-chaîne courant. Le compteur I est réinitialisé à un et le noeud courant redevient la racine de l'arbre (104). Le premier symbole du code-chaîne courant, c'est-à-dire 0, étant déjà représenté par un arc partant du noeud courant, on se positionne dans l'arbre au niveau du noeud correspondant à l'autre extrémité de cet arc, qui devient le nouveau noeud courant. Ensuite, le second symbole du code-chaîne courant, c'est-à-dire 1, étant déjà représenté par un arc partant du noeud courant, on se positionne dans l'arbre au niveau du noeud correspondant à l'autre extrémité de cet arc, qui devient le nouveau noeud courant. Finalement, le troisième symbole du code-chaîne courant, c'est-à-dire 1, est associé au noeud courant par la création d'un arc-fils droit. A son extrémité est créé un noeud (105). Le compteur I étant inférieur à trois (106), il est incrémenté à la valeur deux et on réalise une permutation circulaire du code-chaîne courant (106/107), ce qui donne le nouveau code-chaîne courant 101 (107). Ce code-chaîne étant déjà représenté dans l'arbre, il n'y a pas création de nouveaux arcs lors du déroulement de la tâche 105. Le compteur I étant inférieur à trois (106) est incrémenté à la valeur trois (106/107) et on réalise une permutation circulaire du code-chaîne courant, ce qui donne le nouveau code-chaîne courant 110. La racine de l'arbre redevient le noeud courant (107). Le premier symbole du code-chaîne courant, c'est-à-dire 1, étant déjà représenté par un arc partant du noeud courant, on se positionne dans l'arbre au niveau du noeud correspondant à l'autre extrémité de cet arc, qui devient le nouveau noeud courant. Ensuite, le second symbole du code-chaîne courant, c'est-à-dire 1, est associé au noeud courant par la création d'un arc-fils droit. A son extrémité est créé un noeud, qui devient le nouveau noeud courant. Finalement, le troisième symbole du code-chaîne courant, c'est-à-dire 0, est associé au noeud courant par la création d'un arc-fils gauche. A son extrémité est créé un noeud (105).

Le compteur I étant égal à trois (106 et 106/108), on teste s'il reste une période à traiter (108) et on sélectionne la période suivante de la liste des périodes de code-chaîne (108/109). Cette période 1 devient la nouvelle période courante (109). La période courante est dupliquée par périodisation jusqu'à ce que l'on obtienne un code-chaîne de longueur supérieure ou égale à trois. Le code-chaîne correspondant, dit code-chaîne courant, est donc 111. Un compteur I est initialisé à un et le noeud courant est la racine de l'arbre (104). Le premier symbole du code-chaîne courant, c'est-à-dire 1, étant déjà représenté par un arc partant du noeud courant, on se positionne dans l'arbre au niveau du noeud correspondant à l'autre extrémité de cet arc, qui devient le nouveau noeud courant. Ensuite, le second symbole du code-chaîne courant, c'est-à-dire 1, étant déjà représenté par un arc partant du noeud courant, on se positionne dans l'arbre au niveau du noeud correspondant à l'autre extrémité de cet arc, qui devient le nouveau noeud courant. Finalement, le troisième symbole du code-chaîne courant, c'est-à-dire 1, est associé au noeud courant par la création d'un arc-fils droit. A son extrémité est créé un noeud (105).

Le compteur I étant égal à la longueur de la période courante (106 et 106/108), on teste s'il reste une période à traiter (108). La liste des périodes étant vide (108/110), l'algorithme se termine. L'arbre binaire représentant les segments digitaux de longueur au plus trois est en mémoire (110).

La figure 5 représente, à titre d'exemple, un graphe. Les cercles noirs représentent les noeuds du graphe et les flèches représentent les arcs orientés du graphe. Les noeuds sont repérés par les lettres A, B, C, D, E, F et G. Dans cette figure le chiffre 0 représente un premier symbole codant un type de déplacement dans le maillage, par exemple le déplacement horizontal. Le chiffre 1 représente un second symbole codant un autre type de déplacement dans le maillage, par exemple un déplacement vertical. Ainsi, le parcours d'un chemin du graphe donne une succession de symboles 0 et 1 représentant le code-chaîne de la primitive digitale qui s'inscrit sur le maillage.

Dans la construction du graphe représenté, à titre d'exemple, à la figure 5, on fixe la longueur maximale N des segments digitaux à deux. Au lancement de l'algorithme, on construit une structure de type arbre binaire en appliquant l'algorithme de construction d'une structure informatique de type arbre susmentionné. On obtient ainsi l'arbre de la figure 4 tronqué à la profondeur 2 (201). Ensuite, on recherche une première feuille courante, par exemple la feuille la plus à gauche, c'est-à-dire le noeud D. Le code-chaîne associé au chemin entre la racine et la feuille courante est donc 00 (202). Le premier symbole de ce code-chaîne est supprimé. On obtient ainsi le code-chaîne courant réduit 0 (203). En partant de la racine A, on parcourt la structure informatique selon le code-chaîne courant réduit. Le noeud d'arrivé est le noeud B, qui est le noeud associé à la feuille D (204). Puisque B a pour fils gauche le noeud D, on crée un arc orienté de type 0 de la feuille D vers le fils D. Puisque B a pour fils droit le noeud E, on crée un arc orienté de type 1 de la feuille D vers le noeud fils E (205). Ensuite, on recherche une autre feuille non traitée (206 et 206/207), on choisit par exemple la feuille E et on enregistre le chemin de la racine à cette feuille qui est le code-chaîne 01 (207). Le premier symbole de ce code-chaîne est supprimé. On obtient ainsi le code-chaîne courant réduit 1 (203). En partant de la racine A, on parcourt la structure informatique selon le code-chaîne réduit. Le noeud d'arrivé est le noeud C, qui est le noeud associé à la feuille E (204). Puisque C a pour fils gauche le noeud F, on crée un arc orienté de type 0 de la feuille E vers le fils F. Puisque C a pour fils droit le noeud G, on crée un arc orienté de type 1 de la feuille E vers le noeud-fils G (205). Ensuite, on recherche une autre feuille non traitée (206 et 206/207), on choisit par exemple la feuille F et on enregistre le chemin de la racine à cette feuille qui est le code-chaîne 10 (207). Le premier symbole de ce code-chaîne est supprimé. On obtient ainsi le code-chaîne courant réduit 0 (203). En partant de la racine A, on parcourt la structure informatique selon le code-chaîne réduit. Le noeud d'arrivé est le noeud B qui est le noeud associé à la feuille F (204). Puisque B a pour fils gauche le noeud D, on crée un arc orienté de type 0 de la feuille F vers le fils D. Puisque B a pour fils droit le noeud E, on crée un arc orienté de type 1 de la feuille F vers le noeud fils E (205). Ensuite, on recherche une autre feuille non traitée (206 et 206/207), c'est la feuille G et on enregistre le chemin de la racine à cette feuille qui est le code-chaîne 11 (207). Le premier symbole de ce code-chaîne est supprimé. On obtient ainsi le code-chaîne courant réduit 1 (203). En partant de la racine A, on parcourt la structure informatique selon le code-chaîne réduit. Le noeud d'arrivé est le noeud C qui est le noeud associé à la feuille G (204). Puisque C a pour fils gauche le noeud F, on crée un arc orienté de type 0 de la feuille G vers le fils F. Puisque C a pour fils droit le noeud G, on crée un arc orienté de type 1 de la feuille G vers le noeud fils G (205). Enfin, comme il ne reste plus de feuilles non traitées (206 et 206/208), l'algorithme de construction de la structure informatique de graphe se termine et le graphe est mémorisé ; ce graphe représente l'ensemble des courbes rectilignes, compte tenu de la discrétisation de l'image, sur une différence d'abscisses curvilignes égale à deux (208).

La figure 6 représente une image constituée de 6 pavés indicés a, b, c, d, e et f, donnée à titre d'exemple. Toutes les arêtes du pavage sont, pour cet exemple, considérées comme intéressantes à l'exception des arêtes de bord; par conséquent, les seules arêtes exploitées dans cet exemple sont les arêtes a-b, a-c, b-d, c-d, c-e, d-f, e-f. Dans cette figure et dans chaque pavé, le nombre indiqué représente la valeur numérique du pavé fournie par le dispositif d'acquisition. Les jonctions qui ont au moins une arête jugée intéressante partant vers la droite ou vers le haut sont indicées J1, J2, J3, J4, J5 et J6.

Pour cet exemple représenté à la figure 6, la classe de primitives choisie est l'ensemble des segments de droite de longueur trois et d'angle compris entre 0 et 90 degrés. La classe auto-génératrice est donc l'ensemble des segments de droite de longueur au plus égale à trois et d'angle compris entre 0 et 90 degrés. La structure informatique utilisée est l'arbre présenté dans la figure 4. Le symbole 0 dans cet arbre correspond à l'arête horizontale partant vers la droite à partir d'une jonction. Le symbole 1 dans cet arbre correspond à l'arête verticale partant vers le haut à partir d'une jonction. Le critère complémentaire est que la longueur soit strictement égale à trois. Nous choisissons dans cet exemple, de vérifier la superposition des orientations du chemin parcouru et des lignes de niveau.

On parcourt sur la figure 6 les arêtes des pavés dans le sens croissant des indices des pavés (301). Dans la description qui suit, on ne considèrera comme jonctions intéressantes que les jonctions J1, J2 et J4. On pourrait considérer également les autres jonctions comme intéressantes ; par souci de simplicité de la description, on se limitera aux jonctions J1, J2 et J4, sans que la généralité de la description n'en souffre. La première jonction de départ intéressante est J1 (302), on construit le chemin vide qui est introduit (302/303) dans la pile des chemins à traiter (303). En tâche 304, on teste s'il reste un chemin à traiter ; c'est le cas (304/305) et on sélectionne alors le chemin vide comme chemin sélectionné (305). On associe à la jonction J1 le noeud racine N1 de l'arbre de la figure 4. A partir du noeud N1, l'arbre de la figure 4 montre qu'il faut rechercher les arêtes de prolongement parmi l'arête partant de la jonction J1 vers la droite et l'arête partant de la jonction J1 vers le haut. L'arête a-b part de J1 vers le haut, mais n'est pas considérée car aucune ligne de niveau ne passe entre les pavés a et b (306). Il n'y a pas d'arêtes de prolongement, la tâche (307) est inopérante. En tâche (308), on teste la validité du chemin sélectionné selon les critères quantitatifs secondaires. Le chemin sélectionné étant de longueur zéro (308/310), on supprime le chemin sélectionné de la pile des chemins à traiter (310). Étant donné qu'il ne reste plus de chemin dans la pile des chemins à traiter (304), on passe à la jonction de départ J2 (302). On construit le chemin vide qui est introduit dans la pile des chemins à traiter (302/303 et 303). Il reste le chemin vide à traiter (304 et 304/305) ; on sélectionne le chemin vide comme chemin sélectionné (305). On associe à la jonction J2 le noeud racine N1 de l'arbre de la figure 4. A partir du noeud N1, l'arbre montré à la figure 4 indique qu'il faut rechercher les arêtes de prolongement parmi l'arête partant de la jonction J2 vers la droite et l'arête partant de la jonction J2 vert le haut. L'arête a-c part de J2, et se superpose à la ligne de niveau passant entre les pavés a et c (306). On construit le chemin {a-c} que l'on ajoute à la pile des chemins à traiter (307), puis on teste la validité du chemin sélectionné selon les critères quantitatifs secondaires (308). Le chemin vide étant de longueur zéro (308/310), on supprime le chemin vide de la pile des chemins à traiter (310). Il reste le chemin {a-c} dans la pile des chemins à traiter (304) qui devient le nouveau chemin sélectionné (305). J3 est la jonction terminale du chemin {a-c}. On associe à la jonction J3 le noeud N2 de l'arbre de la figure 4, qui est le fils gauche de N1 de symbole 0 correspondant à l'arête horizontale a-c. A partir du noeud N2, l'arbre montré à la figure 4 indique qu'il faut rechercher parmi l'arête partant vers la droite et l'arête partant vers le haut les arêtes de prolongement. Les arêtes b-d et c-d partent de J3, mais seule l'arête c-d se superpose à une ligne de niveau (306). On construit le chemin {a-c, c-d} que l'on ajoute à la pile des chemins à traiter (307), puis on teste la validité du chemin {a-c} selon les critères quantitatifs secondaires (308). Le chemin {a-c} étant de longueur un (308/310), on le supprime de la pile des chemins à traiter (310). Il reste le chemin {a-c, c-d} dans la pile des chemins à traiter (304) qui devient le nouveau chemin sélectionné (305). J5 est la jonction terminale du chemin {a-c, c-d}. On associe à la jonction J5 le noeud N5 de l'arbre de la figure 4, qui est le fils droit de N2 de symbole 1 correspondant à l'arête verticale c-d. A partir du noeud N5, l'arbre montré à la figure 4 indique qu'il faut rechercher parmi l'arête partant vers la droite et l'arête partant vers le haut, les arêtes de prolongement. Les arêtes d-f et e-f partent de J5, mais seule l'arête e-f se superpose à une ligne de niveau (306). On construit le chemin {a-c, c-d, e-f} que l'on ajoute à la pile des chemins à traiter (307), puis on teste la validité du chemin {a-c, c-d} selon les critères quantitatifs secondaires (308). Le chemin {a-c, c-d} étant de longueur deux (308/310), on le supprime de la pile des chemins à traiter (310). Il reste le chemin {a-c, c-d, e-f} dans la pile des chemins à traiter (304) qui devient le nouveau chemin sélectionné (305). J6 est la jonction terminale du chemin {a-c, c-d, e-f}. On associe à la jonction J6 le noeud N11 de l'arbre de la figure 4, qui est le fils droit de N5 de symbole 1 correspondant à l'arête verticale e-f. A partir du noeud N11, l'arbre montré à la figure 4 indique qu'il n'y a plus aucune arête à parcourir (306). Étant donné qu'il n'y a pas d'arête de prolongement (307), on teste la validité du chemin sélectionné selon les critères quantitatifs secondaires (308). Le chemin sélectionné étant de longueur trois (308/309), on stocke le chemin {a-c, c-d, e-f} dans la liste des primitives extraites (309), puis on supprime le chemin sélectionné de la pile des chemins à traiter (310). Étant donné qu'il ne reste plus de chemin dans la pile des chemins à traiter (304), on passe à la jonction de départ J4 (302). On construit le chemin vide qui est introduit dans la pile des chemins à traiter (302/303 et 303). Il reste le chemin vide à traiter (304 et 304/305), donc on sélectionne le chemin vide comme étant le chemin sélectionné (305). On associe à la jonction J4 le noeud racine N1 de l'arbre de la figure 4. A partir du noeud N1, l'arbre montré à la figure 4 indique qu'il faut rechercher parmi l'arête partant vers la droite et l'arête partant vers le haut, les arêtes de prolongement. L'arête c-e part de J4, et se superpose à la ligne de niveau (306). On construit le chemin {c-e} que l'on ajoute à la pile des chemins à traiter (307), puis on teste la validité du chemin sélectionné selon les critères quantitatifs secondaires (308). Le chemin vide étant de longueur zéro (308/310), on supprime le chemin vide de la pile des chemins à traiter (310). Il reste le chemin {c-e} dans la pile des chemins à traiter (304) qui devient le nouveau chemin sélectionné (305). J5 est la jonction terminale du chemin {c-e}. On associe à la jonction J5 le noeud N2 de l'arbre de la figure 4, qui est le fils gauche de N1 de symbole 0 correspondant à l'arête horizontale c-e. A partir du noeud N2, l'arbre montré à la figure 4 indique qu'il faut rechercher parmi l'arête partant vers la droite et l'arête partant vers le haut, les arêtes de prolongement. Les arêtes d-f et e-f partent effectivement de J5, mais seule e-f se superpose à une ligne de niveau (306). On construit le chemin {c-e, e-f} que l'on ajoute à la pile des chemins à traiter (307), puis on teste la validité du chemin {c-e} selon les critères quantitatifs secondaires (308). Le chemin {c-e} étant de longueur un (308/310), on le supprime de la pile des chemins à traiter (310). Il reste le chemin {c-e, e-f} dans la pile des chemins à traiter (304) qui devient le nouveau chemin sélectionné (305). J6 est la jonction terminale du chemin {c-e, e-f}. On associe à la jonction J6 le noeud N5 de l'arbre de la figure 4, qui est le fils droit de N2 de symbole 1 correspondant à l'arête verticale e-f. A partir du noeud N5, l'arbre montré à la figure 4 indique qu'il faut rechercher parmi l'arête partant vers la droite et l'arête partant vers le haut, les arêtes de prolongement, mais aucune de ces arêtes n'est considérée car elles sont sur le bord de l'image (306). Étant donné qu'il n'y a pas d'arête de prolongement (307), on teste la validité du chemin sélectionné selon les critères quantitatifs secondaires (308). Le chemin sélectionné étant de longueur deux (308/310), on supprime le chemin {c-e, e-f} de la pile des chemins à traiter (310). Étant donné qu'il ne reste plus de chemin dans la pile des chemins à traiter (304), et plus de jonction considérée comme intéressante (302 et 302/311), l'algorithme de transformation de l'image en primitives géométriques se termine (311). La seule primitive extraite est le segment digital {a-c, c-d, e-f}.

La figure 7 représente l'image de la figure 6 sur laquelle on a superposé des lignes épaisses sur l'ensemble des arêtes du maillage ; ces lignes représentent la primitive digitale extraite {a-c, c-d, e-f} suite à l'application de l'algorithme de transformation de l'image en primitives géométriques selon l'exemple de la figure 6. Comme sur cette dernière figure, les 6 pavés sont indicés a, b, c, d, e, et f. Dans une dernière étape du procédé de traitement d'image selon l'invention, la primitive digitale extraite {a-c, c-d, e-f} est fournie en tant que représentation de l'image initiale de la figure 6.

Le programme informatique de traitement d'image selon l'invention est apte à effectuer les différentes étapes d'algorithme décrites ci-dessus en référence aux figures 1 à 7 pour transformer une image numérisée initiale en une liste de primitives géométriques et fournir cette liste en tant que représentation de l'image numérisée initiale.

On va maintenant décrire un système pour la mise en oeuvre, au moyen de ce programme informatique, d'une application du procédé de traitement d'image décrit ci-dessus à la localisation de la voie de circulation d'un véhicule, à partir d'une caméra vidéo embarquée, en références aux figures 8 et 9.

Par exemple, on choisit les éléments suivants : l'ensemble des segments de droites digitaux ayant au moins un angle minimal par rapport à l'horizontale comme classe de primitives géométriques, avec comme condition supplémentaire d'être constitués d'arêtes du pavage en dessous de la ligne d'horizon, et d'avoir une longueur supérieure à un seuil choisi, de manière à éliminer la plupart des segments pouvant être générés par le bruit lors de l'acquisition de l'image.

Sur la figure 8, on a représenté un véhicule 19 équipé d'un système de commande de direction 18 qui comporte une caméra vidéo noir et blanc 20 reliée à un micro-ordinateur 21. Le micro-ordinateur 21 comporte une carte de numérisation vidéo 22 et une carte d'acquisition et de conversion analogique numérique 23. L'ensemble 20-22-23 constitue un moyen d'acquisition d'images numérisées. La caméra 20 pourrait être remplacé par un autre moyen de détection, un radar ou un lidar par exemple. La caméra 20 est fixée au plafond du véhicule à l'intérieur de l'habitacle, de manière à capturer des images de la chaussée 25 à l'avant du véhicule à travers le pare-brise 24. Dans cette application, le procédé de traitement d'images décrit ci-dessus est utilisé pour détecter dans chaque image un élément de repérage particulier, par exemple les bandes de séparation des voies de circulation (non représentées) peintes sur la chaussée 25 sur laquelle roule le véhicule 19. Pour cela, la classe de primitive géométrique est choisie de manière à englober des primitives géométriques particulières aux éléments de repérage, à savoir ici des bandes longitudinales blanches ou claires, qui forment un angle voisin de la perpendicularité par rapport à l'horizontale. L'ensemble des segments de droites digitaux ayant au moins un angle minimal par rapport à l'horizontale constitue donc une classe particulière de primitives géométriques adaptée à ce cas.

Le véhicule 19 est équipé d'une batterie supplémentaire 38 et d'un onduleur/régulateur 39 pour l'alimentation du micro-ordinateur 21. La direction du véhicule est électrique et munie d'un moteur de commande 28 apte à être commandé par le micro-ordinateur 21, par l'intermédiaire d'une carte de commande non représentée.

Lorsque le système de commande est mis en service, au moyen d'un interrupteur 27, le micro-ordinateur 21 commence l'acquisition périodique à une fréquence prédéterminée d'une séquence d'images, qui peuvent être affichées sur un écran de visualisation 44 à l'intérieur de l'habitacle.

Le procédé de commande utilisé est représenté à la figure 9. Chaque image numérisée acquise par le micro-ordinateur 21 est discrétisée selon un même pavage. Le micro-ordinateur 21 exécute un logiciel pour :
- à l'étape 30, au début du traitement, construire une structure informatique de type arbre selon l'algorithme décrit ci-dessus, en référence à la figure 1. Cette structure informatique, qui code l'ensemble des primitives géométriques appartenant à la classe choisie sur le maillage des images, est mémorisée dans une mémoire 26 du micro-ordinateur 21 à l'étape 31 ;
- à l'étape 32, faire acquérir par le moyen d'acquisition 20-22-23 une image numérisée de la chaussée ;
- à l'étape 33, mémoriser l'image acquise dans la mémoire 26 ;
- à l'étape 34, transformer l'image numérisée mémorisée en une liste de primitives géométriques selon l'algorithme décrit précédemment. Pour cela, la structure informatique mémorisée est utilisée pour effectuer l'épreuve d'appartenance des primitives extraites à la classe choisie de primitives géométriques ;
- à l'étape 35, détecter les éléments de repérage dans la liste de primitives extraites et calculer une position du véhicule 19 par rapport à la voie de circulation à partir de la position des éléments de repérage ;
- à l'étape 36, calculer une valeur de consigne d'angle au volant en fonction de la position du véhicule ou en fonction de plusieurs positions successives calculées précédemment à l'aide des images précédentes ;
- à l'étape 37, commander le moteur de commande de direction 28 pour tourner la colonne de direction à la valeur de consigne calculée.

Les étapes 32 à 37 sont répétées périodiquement, en fonction de la vitesse du véhicule, pour assurer un contrôle suffisamment fréquent de sa position par rapport à la voie de circulation. De cette manière, le véhicule peut être asservi à une trajectoire idéale, de manière à rester entre deux bandes de séparation des voies déterminées, par exemple sensiblement au milieu de la voie de circulation. Un dispositif chien de garde 43 est également relié au micro-ordinateur 21 pour rendre automatiquement le contrôle manuel de la direction du véhicule au conducteur si un dysfonctionnement affecte le micro-ordinateur 21.

Le fait de réaliser préalablement la construction de la structure informatique qui sert au traitement de toutes les images permet d'accélérer le traitement des images, à l'étape 34, par rapport à d'autres techniques connues. Les étapes 30 et 31 constituent ainsi un pré-traitement des images. Les étapes 30 et 31 peuvent être effectuées à l'aide du micro-ordinateur 21 et de sa mémoire 26, ou éventuellement par un autre ordinateur (non représenté) relié au micro-ordinateur 21. Ce deuxième ordinateur peut ainsi avoir des caractéristiques optimisées pour la construction de la structure informatique, de manière à accélérer l'exécution de l'étape 30. Du fait de sa capacité à être exécuté rapidement, sur un matériel informatique spécialisé ou non, le programme de traitement d'image est adapté à des applications en temps réel, comme le guidage automatique d'un véhicule.

En outre, pour cette même application, la variante où la classe de primitives géométriques est l'ensemble des courbes de faible courbure peut aussi être utilisée.

Au-delà de cet exemple de contrôle actif de déplacements, le procédé objet de l'invention est utilisable pour d'autres applications, comme le contrôle passif d'un déplacement d'un objet dans une ou plusieurs images, à l'aide des positions successives de l'objet dans une séquence de plusieurs images. On peut ainsi commander le déclenchement automatique d'un feu de signalisation routière à l'aide d'une caméra disposée de manière à viser une zone donnée de la rue en amont du feu. Lorsqu'une voiture est détectée à l'arrêt et à une distance prédéterminée du feu à l'aide de la liste de primitives géométriques extraites, le feu est basculé au vert pour réduire la longueur de la file.

Pour une application nécessitant un appariement entre images, on pourra choisir les éléments suivants : l'ensemble des arêtes du pavage qui se situent dans le champ d'observation commun entre les images, l'ensemble des segments de droite de longueur correspondant au plus petit objet à détecter comme classe de primitives géométriques.

Dans tous les cas, les avantages du procédé de traitement d'image selon l'invention sont de permettre d'extraire une quantité réduite, mais pertinente pour une application donnée, d'information géométrique ou picturale, de manière à réduire les capacités de stockage et de traitement requises par toute application faisant usage de cette information; de réduire les flux de données à transmettre et donc accélérer la transmission de cette information.

Grâce au filtrage purement géométrique selon l'invention, la qualité de netteté de l'image n'est pas primordiale. Les procédé d'extraction des primitives géométriques reste stable avec des images floues. Le filtrage est efficace dès que les valeurs de champ de deux pavés diffèrent d'un seul niveau numérique discret. Ainsi, contrairement aux procédés faisant usage d'un filtrage de l'image en intensité, par exemple par une méthode de type Laplacien ou gradient, le procédé de traitement selon l'invention ne requiert pas un fort contraste d'image.

Bien que l'invention ait été décrite en liaison avec plusieurs modes de réalisation particuliers, il est bien entendu qu'elle n'y est nullement limitée et qu'elle comprend tous les équivalents techniques des moyens décrits ainsi que leurs combinaisons si celles-ci entrent dans le cadre de l'invention.

## Revendications

1. Procédé de traitement d'image numérisée, ledit procédé comportant une étape consistant à recevoir une image numérisée discrétisée selon un pavage, ladite image comportant une séquence de signaux représentant des valeurs de champ, au moins une valeur de champ étant associée à chacun des pavés dudit pavage, **caractérisé en ce qu'**il n'exploite de l'image que l'ensemble de ses lignes de niveau définies à partir des valeurs de champ associées à chaque pavé, ledit procédé comportant les étapes consistant à :
- prédéfinir une ou plusieurs classe(s) de primitives géométriques ;
- générer à partir de ladite image reçue une liste de primitives géométriques appartenant à ladite ou auxdites classe(s) prédéfinie(s), chaque primitive géométrique de ladite liste étant générée en effectuant un cheminement sur un maillage formé des arêtes dudit pavage et en regroupant une ou des partie(s) de lignes de niveau qui sont parcourues au cours dudit cheminement, ledit cheminement étant poursuivi tant qu'un chemin parcouru depuis au moins une jonction d'arêtes initiale se superpose au moins partiellement à une ou plusieurs lignes de niveau et tant que ce chemin appartient à ladite ou auxdites classe(s) prédéfinie(s) de primitives géométriques ;
- fournir une nouvelle image comportant l'ensemble des primitives géométriques de ladite liste en tant que représentation de ladite image reçue.

2. Procédé selon la revendication 1, **caractérisé par le fait que** chaque ligne de niveau s'identifie à une frontière d'un ensemble de pavés dudit pavage pour chacun desquels une valeur de champ est supérieure ou égale à un niveau prédéterminé.

3. Procédé selon la revendication 1, **caractérisé par le fait que** chaque primitive géométrique s'identifie à un chemin sur des arêtes dudit maillage, ladite ou lesdites classe(s) prédéfinie(s) de primitives géométriques étant définie(s) par des conditions de cheminement prédéterminées et éventuellement par des critères complémentaires.

4. Procédé selon la revendication 1, **caractérisé en ce qu'**il comporte une étape consistant à construire une structure informatique codant l'ensemble des chemins dudit maillage appartenant à ladite ou auxdites classe(s) prédéfinie(s) de primitives géométriques, l'étape de génération de ladite liste de primitives géométriques étant effectuée de manière que l'épreuve d'appartenance de chaque chemin parcouru à ladite ou auxdites classe(s) prédéfinie(s) est réalisée à l'aide de ladite structure informatique.

5. Procédé selon la revendication 4, **caractérisé en ce que** ladite structure informatique est de type arbre.

6. Procédé selon la revendication 5, **caractérisé en ce que** ladite structure informatique est de type arbre binaire, la classe de primitives géométriques prédéfinie étant l'ensemble des segments de droites digitaux de longueur inférieure à une longueur maximale prédéterminée (N), ou l'un de ses sous-ensembles.

7. Procédé selon la revendication 4, **caractérisé en ce que** ladite structure informatique construite étant d'abord de type arbre, il comporte une étape de transformation de ladite structure de type arbre en une structure de type graphe orienté.

8. Procédé selon la revendication 7, **caractérisé en ce que** ladite structure informatique de type graphe orienté est construite à partir d'un arbre dont certaines feuilles ont des arcs-fils sur elles-mêmes ou sur d'autres feuilles, la classe de primitives géométriques prédéfinie étant l'ensemble des courbes de faible courbure, c'est-à-dire l'ensemble des courbes assimilables à des courbes rectilignes sur une certaine différence d'abscisses curvilignes (N), ladite différence d'abscisses curvilignes étant prédéterminée en fonction de la discrétisation de ladite image numérisée.

9. Programme informatique de traitement d'image numérisée, ledit programme informatique comportant des codes d'instruction propres à être lus ou stockés sur un support, **caractérisé en ce que** lesdits codes d'instruction sont exécutables par un premier ordinateur (21) pour :
- recevoir une image numérisée discrétisée selon un pavage et mémoriser ladite image dans une mémoire (26) dudit premier ordinateur, ladite image comportant une séquence de signaux représentant des valeurs de champ, au moins une valeur de champ étant associée à chacun des pavés dudit pavage,
- prédéfinir une ou plusieurs classe(s) de primitives géométriques,
- effectuer un cheminement sur un maillage formé des arêtes dudit pavage ;
- éprouver si un chemin parcouru au cours dudit cheminement depuis au moins une jonction d'arêtes initiale se superpose au moins partiellement à une ou plusieurs lignes de niveau de l'image, lesdites lignes de niveau étant définies à partir des valeurs de champ associées à chaque pavé, et si ledit chemin appartient à ladite ou auxdites classe(s) prédéfinie(s) de primitives géométriques ;
- regrouper une ou des partie(s) de lignes de niveau parcourues au cours dudit cheminement en primitives géométriques appartenant à ladite ou auxdites classe(s) prédéfinie(s) ;
- générer une liste desdites primitives géométriques regroupées ;
- fournir une nouvelle image comportant l'ensemble des primitives géométriques de ladite liste en tant que représentation de ladite image numérisée reçue.

10. Programme informatique selon la revendication 9, **caractérisé en ce que** lesdits codes d'instruction sont exécutables par un ordinateur, distinct ou non dudit premier ordinateur (21), pour construire une structure informatique codant l'ensemble des chemins dudit maillage appartenant à ladite ou auxdites classe(s) prédéfinie(s) de primitives géométriques et pour mémoriser ladite structure informatique dans des moyens de mémorisation, distincts ou non de ladite mémoire (26) du premier ordinateur, l'épreuve d'appartenance dudit chemin parcouru à ladite ou auxdites classe(s) prédéfinie(s) de primitives géométriques étant effectuée à l'aide de ladite structure informatique mémorisée.

11. Utilisation du procédé selon l'une des revendications 1 à 8 pour le contrôle actif ou passif d'un déplacement, au moins un élément de repérage étant représenté sur une série d'au moins une image numérisée, chaque image de ladite série étant discrétisée selon un même pavage et comportant une séquence de signaux représentant des valeurs de champ, au moins une valeur de champ étant associée à chacun des pavés dudit pavage, ledit élément de repérage comportant une ou plusieurs primitive(s) géométrique(s) particulière(s) appartenant à une ou plusieurs classe(s) particulière(s), **caractérisée en ce que** chaque image de ladite série est traitée par ledit procédé de manière à fournir une nouvelle série d'au moins une nouvelle image, ladite ou lesdites classe(s) de primitives géométriques prédéfinie(s) au cours dudit procédé étant constituée(s) de ladite ou desdites classe(s) particulière(s) ; une position successive dudit élément de repérage étant détectée dans chaque image de ladite nouvelle série à partir de ladite ou desdites primitive(s) géométrique(s) particulière(s) afin de contrôler un déplacement relatif dudit élément de repérage.

12. Utilisation selon la revendication 11, **caractérisée en ce que** lesdites images de ladite série sont traitées par le procédé selon l'une des revendications 4 à 8, l'étape de construction (30) de ladite structure informatique n'étant effectuée qu'une seule fois, la même structure informatique étant utilisée pour le traitement de toutes les images.

13. Dispositif destiné à la mise en oeuvre de l'utilisation selon les revendications 11 ou 12, **caractérisé en ce qu'**il comporte :
- un moyen d'acquisition d'images numérisées (20, 22, 23) discrétisées selon un même pavage et comportant chacune une séquence de signaux représentant des valeurs de champ, au moins une valeur de champ étant associée à chacun des pavés dudit pavage,
- une unité centrale (21) munie d'une mémoire (26) et reliée audit moyen d'acquisition pour recevoir lesdites images numérisées,
- un programme informatique selon les revendications 9 ou 10 agencé de manière à être exécutable par ladite unité centrale (21) pour traiter lesdites images reçues de manière à fournir des nouvelles images en tant que représentation desdites images reçues,
- des moyens de détection aptes à détecter des positions successives d'au moins un élément de repérage dans lesdites nouvelles images à partir d'une ou plusieurs primitive(s) géométrique(s) particulière(s) desdites nouvelles images,
- un moyen de commande pour commander activement ou passivement un déplacement relatif entre ledit moyen d'acquisition (19, 20) et ledit élément de repérage.
